# EUROPEAN PATENT APPLICATION

(11) **EP 4 722 834 A1**
(43) Date of publication of application: **08.04.2026**
(21) Application number: 25205959.7
(22) Date of filing: 01.10.2025
(51) Int. Cl.: G05B 19/418, G08B 17/00, G08B 17/06, G08B 17/10, G08B 17/117, G08B 25/14, G08B 19/00, A62C 37/00

(54) **CONTROL PANEL AND METHOD FOR SPARK AND EXPLOSION PROTECTION CONTROL**

(30) Priority: 02.10.2024 US 202463702294 P; 02.10.2024 US 202463702251 P; 02.10.2024 US 202463702312 P; 02.10.2024 US 202463702328 P
(71) Applicant: IEP Technologies, LLC, Marlborough MA 01752 (US)
(72) Inventor: Yohman, Richard D., Canfield,, 44406 (US); Padula, Matthew, Upton, 01568 (US); Minjarik, Ludovit, Brunswick, 44212 (US); Bucci, Richard, New Brighton, 15066 (US); Baillargeon, Brian, North Smithfield, 02896 (US); O'Brien, Brant, Chelmsford, 01824 (US); Karalis, Peter, Watertow, 02472 (US)
(74) Representative: Patentanwälte Pinter & Weiss OG

(57) **Abstract**

A safety control system, comprising a control panel (200) and a number of detection and actuation modules (300) located remote from the control panel (200). A communication connection (265) is provided for each of the number of detection and actuation modules (300) with each communication connection (265) connecting the respective detection and actuation module (300) with the control panel (200) for electronic communication. Each of the number of detection and actuation modules (300) is adapted to receive input signals from a plurality of detectors (212, 214) connected to the respective detection and actuation module (300) over an input connection (221). Each of the number of the detection and actuation module (300) is adapted to monitor the input signals received from each of the detectors (212, 214) connected to the respective detection and actuation module (300) and upon identification of a safety event to actuate one or more of the plurality of actuators (216, 218) connected to the respective detection and actuation module (300) by sending output signals to the one or more of the plurality of actuators (216, 218) over an output connection (226). Each of the number of detection and actuation modules (300) is adapted to indicate the safety event to the control panel (200) via the communication connection (265).

## Description

The present teachings relate generally to safety and protection systems and, more particularly, to explosion and spark protection control systems and the installation of related detectors and actuators.

A control panel for safety and protection systems may receive and process data from a network of detectors. By monitoring the environment of the system based on inputs from detectors, the control panel may predict and/or detect an explosion based on, for example, data from the network of detectors indicating a rapid pressure increase or the presence of flames following a temperature increase.

The control panel may also send signals to a network of actuators which control the deployment of one or more suppressors. The quantity, size, and type of suppressors are chosen based on, but not limited to, the protected vessel size, strength, and geometry, the material being handled, and process operating parameters.

Further, in manufacturing environments, particularly those handling combustible dust or flammable vapors, the risk of explosions caused by sparks is a significant concern. Sparks may be generated during various industrial processes, such as grinding, cutting, or material handling, often due to friction, static discharge, or equipment malfunction. If the sparks come into contact with airborne dust particles or flammable vapors, they may initiate an explosion, posing severe risks to both equipment and personnel.

Traditionally within manufacturing environments, excess wiring runs may take up vulnerable space and restrict placement of various components due to the inefficient use of space. The additional wiring used to run components to and from the electrically coupled control panel may lead to an increase in installation costs. Additionally, excess wiring makes identifying faults, conducting repairs, or troubleshooting more complicated, increasing downtime and maintenance costs.

In the prior art, to implement a safety system for explosion and spark protection control, two different control panels must be installed to carry out the necessary controls for the respective systems. A first control panel receives input signals from explosion detectors. The first control panel processes the input signals from the explosion detectors and determines an explosion risk based on threshold values such as, for example, a maximum allowable pressure differential or rate of pressure change. If there is an explosion detected, then the first control panel sends an output signal to actuate an explosion suppression system. The explosion suppression system deploys one or more suppression unit such as, for example, a chemical suppressor. The suppression units on only selected zones (i.e., not all suppression units in a manufacturing facility) may be deployed to sufficiently mitigate the explosion and related damage. In parallel, the first control panel sends an alarm signal. The prior art method for spark extinguishing is similar to the prior method for explosion suppression. However, a second control panel completes the steps by receiving input signals from spark detectors, like optical sensors, IR (infrared) sensors or UV (ultraviolet) sensors. The second control panel processes the input signals from the spark detectors and determines a spark risk based on threshold values such as, for example, the number of sparks seen in a given amount of time. If spark risk threshold values are reached, then the second control panel sends an output signal to actuate a spark extinguishing system. The spark extinguishing system deploys an extinguishing unit such as, for example, a water spray, or diverts the flow of materials, or shuts down relevant machinery. In parallel, the second control panel sends an alarm signal. The immediate intervention is crucial to preventing the spark from igniting combustible dust or flammable vapors, thereby reducing the risk of an explosion. Such spark detection systems are important for enhancing safety and operational reliability in manufacturing facilities where explosive hazards are present. The first and second control panels have separate components for sending alarm signals or other indicators to users around the manufacturing facility. Safety control system for explosion and spark protection according to the prior art required a great number of independent hardware. Apart from that, the independent hardware operated independently from each other which did not allow a coordinated response to an explosion and spark event.

Therefore, it would be beneficial to have an alternative system and method for the remote installation of detectors and actuators.

Such an alternative safety control system comprises a control panel and a number of detection and actuation modules located remote from the control panel, wherein a communication connection is provided for each of the number of detection and actuation modules with each communication connection connecting the respective detection and actuation module with the control panel for electronic communication, wherein each of the number of detection and actuation modules is adapted to receive input signals from a plurality of detectors connected to the respective detection and actuation module over an input connection, wherein each of the number of the detection and actuation module is adapted to monitor the input signals received from each of the detectors connected to the respective detection and actuation module and upon identification of a safety event to actuate one or more of the plurality of actuators connected to the respective detection and actuation module by sending output signals to the one or more of the plurality of actuators over an output connection, and wherein each of the number of detection and actuation modules is adapted to indicate the safety event to the control panel via the communication connection.

With such a configuration, required wiring, especially of great lengths, can be reduced which eases installation, reduced installation costs and facilitates the identification of faults, repairs or troubleshooting.

In another aspect of the invention, it is beneficial to have a common panel that controls both the explosion protection system and the spark protection system. With such control system it is no longer required to have separate control panels for explosion protection and the spark protection. In that regard, it is especially advantageous to have a control system with at least one of the plurality of detectors being an explosion detector and at least one of the detectors being a spark detector and with at least one of the plurality of actuators being an explosion suppression actuator and with at least one of the actuators being a spark extinguishing actuator.

Within safety and protection systems, the plurality of detectors includes but is not limited to various temperature, pressure, and optical sensors. The various input detectors are designed to produce a variable voltage to gage the surrounding events of the system. The plurality of detectors may include variable voltage signals or ranges including analog or digital sensor signals.

In safety and protection systems, control panels are often designed and installed specifically for particular detectors. Each control panel may be configured to recognize and process data from a set of compatible detectors. These control panels are fine-tuned to meet the specific requirements and parameters of the detectors used. However, later models of detectors or different detectors may send different input signals that the control panel is not designed or installed to handle correctly.

Therefore, in yet another aspect of the invention, it is beneficial to have an alternative system and method for a customizable detector input.

The needs set forth herein as well as further and other needs and advantages are addressed by the present embodiments, which illustrate solutions and advantages described below.

For a better understanding of the present embodiments, together with other and further aspects thereof, reference is made to the accompanying drawings and detailed description, and its scope will be pointed out in the appended claims.
**FIG. 1** depicts a facility with explosion and spark protection according to one embodiment of the present teachings.
**FIG. 2** depicts a control system for explosion and spark protection control for the facility of FIG. 1 according to one embodiment of the present teachings.
**FIG. 3** depicts a detection and actuation module for the control system of FIG. 2 according to one embodiment of the present teachings.
**FIG. 4** depicts a flow diagram of a method for explosion and spark protection control according to one embodiment of the present teachings.
**FIG. 5** depicts an embodiment of a detection and actuation module.
**FIG. 6** depicts a depict a display screens for customizing detector input.
**FIG. 7** depicts a depict a display screens for customizing detector input.
**FIG. 8** depicts a depict a display screens for customizing detector input.

The present teachings are described more fully hereinafter with reference to the accompanying drawings, in which the present embodiments are shown. The following description is presented for illustrative purposes only and the present teachings should not be limited to these embodiments. Any computer configuration and architecture satisfying the speed and interface requirements herein described may be suitable for implementing the system and method of the present embodiments.

In compliance with the statute, the present teachings have been described in language more or less specific as to structural and methodical features. It is to be understood, however, that the present teachings are not limited to the specific features shown and described, since the systems and methods herein disclosed comprise preferred forms of putting the present teachings into effect.

For purposes of explanation and not limitation, specific details are set forth such as particular architectures, interfaces, techniques, etc. in order to provide a thorough understanding. In other instances, detailed descriptions of well-known devices, circuits, and methods are omitted so as not to obscure the description with unnecessary detail.

A "computing system" may provide functionality for the present teachings. The computing system may include software executing on computer readable media that may be logically (but not necessarily physically) identified for particular functionality (e.g., functional modules). The computing system may include any number of computers/processors, which may communicate with each other over a network. The computing system may be in electronic communication with a datastore (e.g., database) that stores control and data information. Forms of computer readable media include, but are not limited to, disks, hard drives, random access memory, programmable read only memory, or any other medium from which a computer can read.

Generally, all terms used in the claims are to be interpreted according to their ordinary meaning in the technical field, unless explicitly defined otherwise herein. All references to a/an/the element, apparatus, component, means, step, etc. are to be interpreted openly as referring to at least one instance of the element, apparatus, component, step, etc., unless explicitly stated otherwise. The steps of any method disclosed herein do not have to be performed in the exact order disclosed, unless explicitly stated. The use of "first", "second," etc. for different features/components of the present disclosure are only intended to distinguish the features/components from other similar features/components and not to impart any order or hierarchy to the features/components.

Recitations of numerical ranges by endpoints include all numbers within that range (e.g., 1 to 5 includes 1, 1.5, 2, 2.75, 3, 3.80, 4, 5, etc.). Where a range of values is "greater than", "less than", etc., of a particular value, that value is included within the range.

Any direction referred to herein, such as "top," "bottom," "left," "right," "upper," "lower," "above," below," and other directions and orientations are described herein for clarity in reference to the figures and are not to be limiting of an actual device or system or use of the device or system.

Many of the devices, articles, or systems described herein may be used in a number of directions and orientations.

Any citation to a reference in this disclosure or during the prosecution thereof is made out of an abundance of caution. No citation (whether in an Information Disclosure Statement or otherwise) should be construed as an admission that the cited reference qualifies as prior art or comes from an area that is analogous or directly applicable to the present teachings.

Turning now to an overview of the present teaching, in various manufacturing plants the presence of flammable materials, combustible dust, and/or volatile chemicals create a risk of a possible explosion. In this respect, safety systems are implemented to suppress or divert an explosion that is potentially created. In safety systems, a control panel integrates real time sensors, automated response mechanisms, and user interfaces to manage the activation and coordination of suppression devices and systems, for example, ensuring rapid isolation of explosive events.

To implement a safety system (e.g., for explosion and spark protection control), wiring must typically be installed from each detector and actuator and run to a central control panel to carry out the necessary controls for a facility.

Within some systems, detector and actuator wiring that runs directly from detectors and actuators to a control panel may become prone to faults due to several factors inherent in long wiring runs. Over extended distances, signal degradation may occur, especially in environments with electrical interference, resulting in diminished signal quality or loss. Additionally, exposure to harsh conditions, such as extreme temperatures, humidity, or corrosive chemicals, may damage the insulation or cause wear and tear on the wiring, leading to shorts, open circuits, or grounding issues.

Mechanical stresses, such as vibrations or physical impacts, may further compromise the integrity of the wiring, causing intermittent or permanent faults. Furthermore, long wiring runs increase the risk of electromagnetic interference (EMI), which may distort sensor signals, reduce accuracy, or create false alarms. All these factors contribute to the potential of faults in systems relying on direct wiring between detectors and actuators and the control panel over long distances.

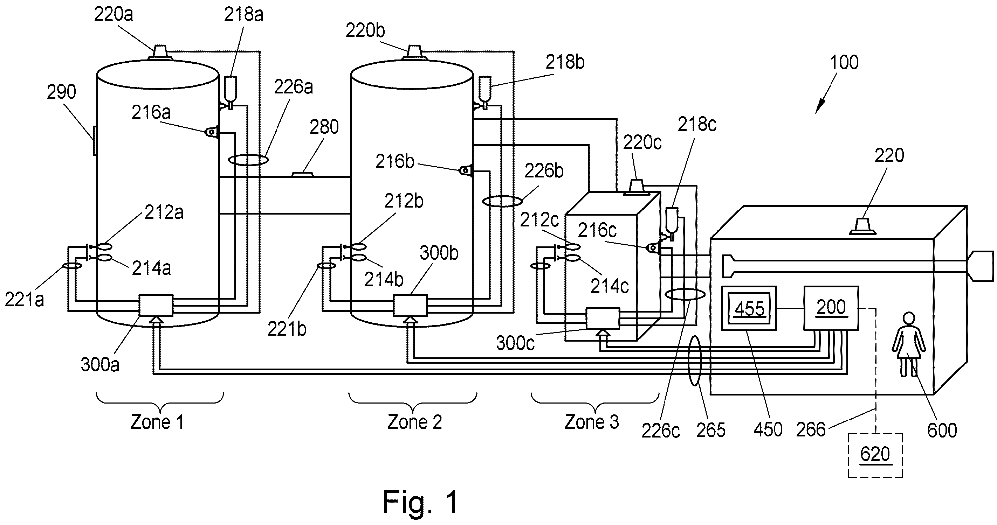

Referring now to the Figures, FIG. 1 illustrates a facility 100 having several zones of protection (labeled as Zone 1, Zone 2, and Zone 3) with several detectors 212, 214 and actuators 216, 218 in each zone. When a detector is generally addressed then the reference numeral 212, 214 is used. When specific detectors are addressed then the detectors are distinguished by adding lower case letters to the reference numeral 212, 214. When an actuator is generally addressed then the reference numerals 216, 218 are used. When specific actuators are addressed then the actuators are distinguished by adding lower case letters to the reference numerals 216, 218. A person of ordinary skill in the art can appreciate how to designate and implement zones of protection for the facility 100 considering, for example, multiple parts of a single manufacturing line or multiple lines combined. Upon installation, a user 600 programs a control panel 200 to define the various zones of protection.

Various detectors 212, 214 are placed throughout the facility 100 to provide explosion and spark protection detection capabilities. For explosion suppression, as a non-limiting example, explosion detectors 214 (i.e., explosion sensors) are provided - explosion detector 214a for Zone 1, explosion detector 214b for Zone 2, and explosion detector 214c for Zone 3. For spark extinguishing, as another non-limiting example, spark detectors 212 (i.e., spark sensors) are provided - spark detector 212a for Zone 1, spark detector 212b for Zone 2, and spark detector 212c for Zone 3.

The explosion detectors 214a-214c may include, but are not limited to, various acoustic, infrared, ultraviolet, and pressure sensors and gas and flame detectors. For example, a MEX-3^{™} Pressure Detector from IEP Technologies may be used. It should be noted that the same set of sensors do not have to be implemented within each zone of protection. Instead, each zone of protection is assessed for possible explosion risks and detection sensors are installed accordingly.

The spark detectors 212a-212c may include, but are not limited to, optical, infrared, fiber optic, electromagnetic, and acoustic sensors. For example, an Atexon^{®} SD300-EX or SDF300-EX Spark Detector from IEP Technologies may be used. It should be noted that the same set of sensors do not have to be implemented within each zone of protection.

Additionally, spark detectors 212 may be placed near or apart from explosion detectors 214 within the same or adjacent zones of the facility 100. For example, the spark detectors 212 may be placed upstream of a manufacturing process or vessel as the associated explosion detectors 214. A spark detector 212 is usually located on ductwork of the facility 100.

Various actuators 216, 218 are placed throughout the facility 100 to provide safety protection (e.g., explosion and spark protection) capabilities. For explosion suppression, explosion suppression units are provided as actuators 218 - explosion suppression actuators 218a-218c for Zones 1-3 in the illustrated embodiment. For spark extinguishing, spark extinguishing units are provided as actuators 216 - spark extinguishing actuators 216a-216c for Zones 1-3 in the illustrated embodiment.

The explosion suppression units, actuators 218a-218c, (i.e., explosion suppression responses) may include, but are not limited to, various electromechanical, hydraulic, pneumatic, pyrotechnic, and spring-loaded actuators. For example, an eSUPPRESSOR^{™} high-rate discharge suppressor or PistonFire II suppressor from IEP Technologies may be used with control panel 200. The present teachings include one or more explosion suppression units as actuators 218 for various zones of the facility. It should be noted that the same explosion suppression units as actuators 218 do not have to be implemented within each zone of protection. Instead, each zone of protection is assessed for possible explosion risks and the explosion suppression units as actuator 218 are installed accordingly.

The spark extinguishing units, actuators 216a-216c, (i.e., spark extinguishing responses) may include, but are not limited to, various electromechanical, hydraulic, pneumatic, pyrotechnic, and spring-loaded actuators. For example, a EXT11, EXT12, or EXT22 extinguishing units from IEP Technologies that spray a small amount of water - extinguishing the hazard without damaging facility 100 equipment - may be used. The present teaching may include one or more spark extinguishing units as actuators 216 for various zones or detection areas of the facility 100. The user 600 of the control system 200 has the option to control and implement one or more protection zones. It should be noted that the same spark extinguishing units as actuators 216 do not have to be implemented within each zone of protection.

In some facilities 100, it may be advantageous to isolate an explosion or vent an explosion rather than suppress it. A explosion isolation valve 280 or an exhaust vent 290 may be used alongside or in place of explosion suppression unit as actuator 218. A person skilled in the art will appreciate the considerations for using a combination of these.

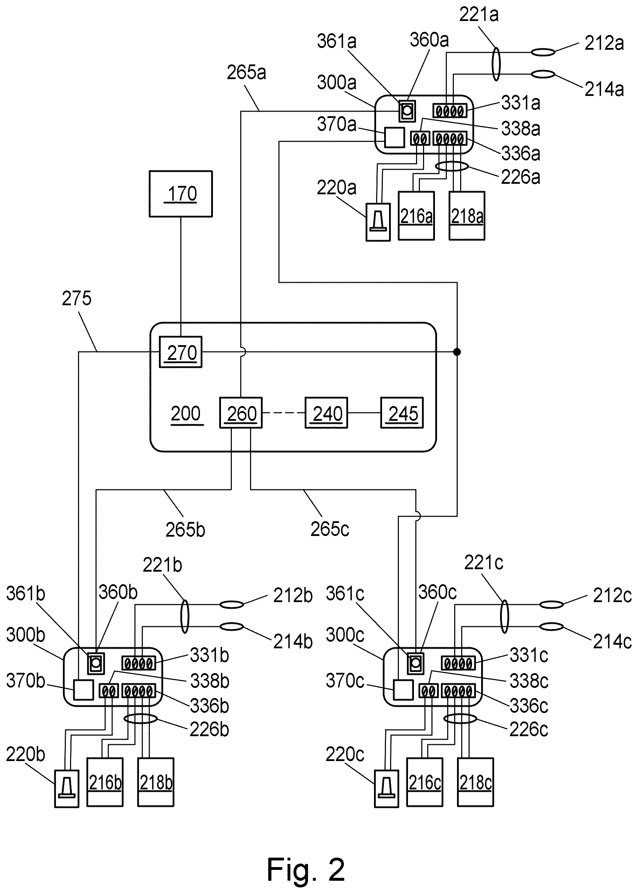

The control panel 200 of the explosion and spark control system of the facility 100 is connected to the detectors 212, 214 and the actuators 216, 218. Rather than direct connections from each of detectors 212, 214 and actuators 216, 218 to the control panel 200, each zone may include a detection and actuation module 300 (D&A module) about the area of detection - D&A module 300a for Zone 1, D&A module 300b for Zone 2, and D&A module 300c for Zone 3. When a D&A module is generally addressed then the reference numeral 300 is used. When specific D&A modules are addressed then the D&A modules are distinguished by adding lower case letters to the reference numeral 300. Internal components of the D&A module 300 are described in further detail with respect to FIG. 2 below.

The control panel 200 may handle between one zone and eight zones, although not limited thereto. It may handle 1, 2, 3, 4, 5, 6, 7, 8, 9, 10,11, 12, 13, 14, 15, 16, 17, 18, 19, 20, 25, 30, etc. zones. To enable such configurability (and more), at least one detection and actuation module 300 may be used. 1, 2, 3, 4, 5, 6, 7, 8, 9, 10, 11, 12, 13, 14, 15, 16, 17, 18, 19, 20, 25, 30, etc. D&A modules 300 may be used. For example, four detection and actuation modules 300 may be used in combination with the control panel 200 to handle eight zones. The detection and actuation module 300 combines inputs and outputs from across the facility 100 for easier installation and maintenance. In general, the control panel 200 may handle any number of zones and can be connected to any number of D&A modules 300 which combine inputs and outputs from across facility 100 for easier installation and maintenance.

Detectors 212, 214, like detectors 212a-212c, 214a-214c in FIG.1, are electrically coupled to respective D&A modules 300a-300c by input connections 221a-221c (i.e., input sensor cables). When an input connection is generally addressed then the reference numeral 221 is used. When a specific input connection is addressed then the input connections are distinguished by adding lower case letters to the reference numeral 221. Alternatively, one or more of the detectors 212, 214 for the various zones may be connected in series or in parallel with one another before being coupled to the respective D&A modules 300a-300c, and onwards to the control panel 200, by the input connections 221.

Actuators 216a-216c, 218a-218c are electrically coupled to respective D&A modules 300a-300c by output connections 226a-226c (i.e., actuator cables). When an output connection is generally addressed then the reference numeral 226 is used. When a specific output connection is addressed then the output connections are distinguished by adding lower case letters to the reference numeral 226.

Each D&A module 300 includes two phases, the first phase being the detection phase involving input sensors such as heat, smoke, flame, or pressure detectors. If the system confirms a hazardous event, the second phase, being the actuation, is triggered to respond to the threat.

The input connections 221a-221c and the output connections 226a-226c may be a first type of wire. In some embodiments, the first type of wire is, for example, but not limited to, copper wiring or other suitable wiring that transmits one signal between a detector 212, 214 or actuator 216, 218 and the corresponding D&A module 300.

Between each of the plurality of D&A modules 300 and the control panel 200 is a second type of wire for a communication connection 265. In some embodiments, the second type of wire is, for example, but not limited to, Ethernet wiring or other suitable wiring that transmits multiple signals between the D&A module 300 and the control panel 200. When a communication connection is generally addressed then the reference numeral 265 is used. When a specific communication connection is addressed then the communication connections are distinguished by adding lower case letters to the reference numeral 265.

This allows to simplify the wiring between the D&A modules 300 and the control panel 200 as only a single communication connection 265 is required between each D&A modules 300 and the control panel 200. There is no need to directly wire the detectors 212, 214 and actuator 216, 218 to the control panel 200. Mounting the D&A Modules 300 close to the detectors 212, 214 and actuators 216, 218 will lower the cost of the installation of the system by minimizing wiring runs from the detectors 212, 214 and actuators 216, 218 to the control panel 200 by instead communicating to the control panel 200 via the communication connection 265, like an ethernet cable, for example.

Each D&A module 300 can be configured centrally via the control panel 200 which simplifies configuration of the control system for explosion and spark protection control. Each D&A module 300 is provided to autonomously carry out all functions for explosion and spark protection with the respective zone(s) assigned to the D&A module 300.

**It** is an aspect of the invention that explosion detectors 214 together with explosion suppression actuators 218 for explosion protection and spark detectors 212 together with spark extinguishing actuators 216 for spark protection may be combined in a single control panel 200 for easier installation and maintenance.

Turning to FIG.2, a control system for explosion and spark protection control is illustrated with more detail of the control panel 200 and D&A modules 300a-300c of FIG. 1. The control panel 200 may comprise a CPU 240 (central processing unit), or other computing system and a memory 245. The control panel 200 may further include a communication module 260 with an LCD (liquid crystal display) screen, lights, alarms, or other means of notifying the user 600, in addition to handling the communication connections 265 to the D&A modules 300.

The control panel 200 further comprises a power module 270 electrically coupled to a power source 170. The power module 270 and the power source 170 may consist of wired power - AC, DC, 12V, 24V, or others known in the art - or backup power such as a battery in case of power failure.

The control panel 200 is used for configuration of the control system for explosion and spark protection control, especially also for configuration of the D&A modules 300. The control panel 200 is further used to display status information of the control system for explosion and spark protection control or of parts thereof, especially of detectors 212, 214 and/or actuators 216, 218.

The plurality of detection and actuation modules 300a, 300b, and 300c may each contain a communication module 360a-360c that are electrically coupled to the communication module 260 of the control panel 200 by communication connections 265a, 265b, and 265c, respectively (one for each zone). Each of the plurality of D&A modules 300a-300c may contain an input terminal 331a-331c and output terminal 336a-336b. The plurality of detectors 212, 214 may be electrically coupled to the input terminals 331a-331c by the input connections 221a-221c. The plurality of actuators 216, 218 may be electrically coupled to the output terminals 336a-336c by the output connections 226a-226c.

In some embodiments, the D&A modules 300a-300c receive power at a power terminal 370a, 370b via a power connection 275 from the power module 270 of the control panel 200. In other embodiments, the D&A modules 300a-300c have separate, direct connections to the power source 170 in the control panel 200. The control panel 200 and D&A modules 300a-300c may be enclosed in separate housings made of, for example, sheet metal to protect components from conditions in the facility 100, although not limited thereto.

In some embodiments, the communication module 360a-360c of the D&A modules 300a-300c comprises a processing unit 361a-361c, like a CPU (central processing unit) or other computing system, and a memory unit 332.

Specifically, the processing unit 361 of a D&A module 300 is capable of receiving inputs from detectors 212, 214 and sending outputs to actuators 216, 218, for example based on thresholds and algorithms set by a manufacturer of the control panel 200, detectors 212, 214, and actuators 216, 218 with input and knowledge from the user 600 of the facility and control panel 200. The thresholds and algorithms may be configured via the control panel 200. The D&A module 300 is capable of manipulating incoming data from each of the connected detectors 212, 214, with the processing unit 361, for example. The processing unit 361 may be programmed by a user 600 to include algorithms to assess a risk of an explosion and quickly differentiate between normal system status and a possible explosion threat.

Further, each communication module 360 of each D&A module 300 may be electrically coupled to the communication module 260 of the control panel 200 via communication connection 265. The communication connections 265a-265c may be, for example, Ethernet cable or alike coupling capable of sending multiple signals in both directions.

Each of the plurality of D&A modules 300a-300c may contain an alarm system 220a-220c for displaying the zone status, electrically coupled at alarm terminals 338a-338c. The alarm system 220a-220c may communicate with the communication module 360 to send and receive data from the communication module 260 of the control panel 200.

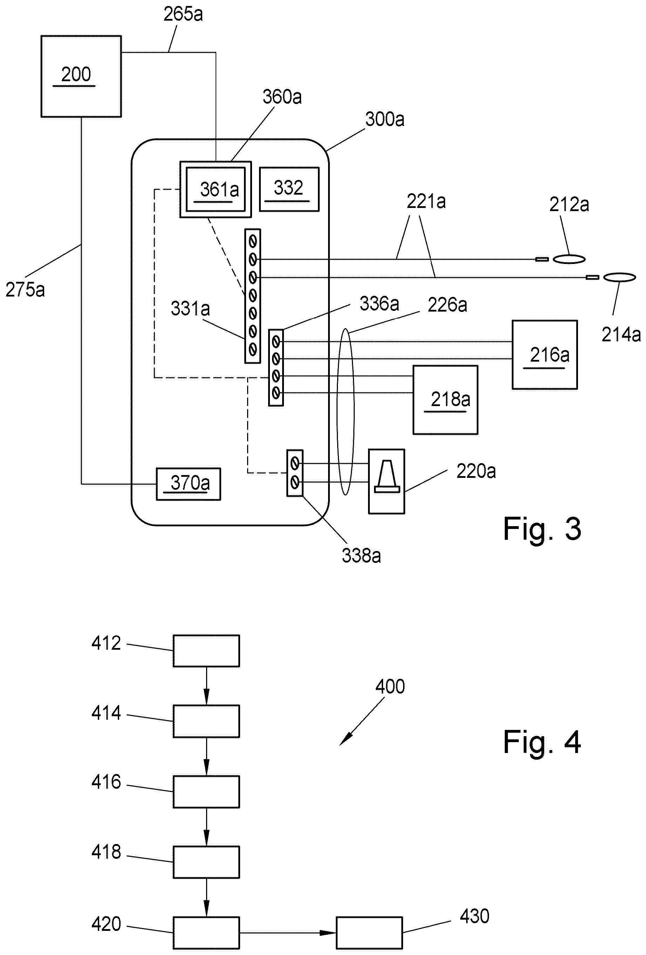

Turning to FIG. 3, the detection and actuation module 300a (i.e., D&A module) according to an embodiment of the present teaching is further illustrated, highlighting connections between the control panel 200 and one D&A module 300a (first shown in FIG. 2) in Zone 1 of the facility 100 of FIG. 1. One or more D&A modules 300 may be used in combination with the control panel 200, each with different configurations according to the user's 600 needs.

In one embodiment, the D&A module 300a may be configured for a single zone of the facility 100. The D&A module 300a includes a plurality of detectors 212a, 214a (input sensors) and a plurality of actuators 216a, 218a (output response systems). These detectors 212a, 214a may be electrically coupled to the input terminal 331a of the D&A module 300a. The actuators 216a, 218a may be electrically coupled to the output terminal 336a of the D&A module 300a in a similar manner.

The D&A module 300a may include communication module 360a coupled to the communication module 260 of the control panel 200. The communication module 360a of the D&A module 300a may send the input signals received from the detector 212, 214 and/or the output signals it sends to the actuators 216, 218 to the control panel 200, via the communication module 360a and via the communication connection 265a, for displaying the input signals and/or output signals at a display of the control panel 200. This can be used to show the status of the control system for explosion and spark protection control at an alarm system 220 of the control panel 200. Further, the D&A module 300a may include terminal 338a for the alarm system 220a. The D&A module 300a may receive power at power terminal block 370a via power connection 275a from the power module 270 of the control panel 200.

FIG. 4 illustrates a method 400 for explosion and spark protection control according to the invention utilizing the D&A modules 300 and detectors 212, 214 and actuators 216, 218 connected to the D&A module 300, in accordance with the present teachings. The method initiates at step 412, where the input connections 221 (e.g., copper wiring) continuously transmit signals from detectors 212 and 214, such as pressure, temperature, or flame sensors, to the D&A module 300. These detectors are configured to detect incipient explosions or sparks. At step 414, the D&A module 300, receives the input signals and performs initial signal processing, filtering, and error-checking via the processing unit 361 of the communication module 360. The D&A module 300, which contains pre-programmed logic algorithms in its processing unit 361, analyzes the input signals from the detectors 212, 214 to confirm whether it meets the predefined threshold conditions for initiating a response.

In optional transformation step 416, the communication module 360 of the D&A module 300 may convert the processed input signal from its raw sensor format to an outgoing communication signal of an appropriate signal type, which could be analog, digital, or a comparable format. This generation 416 enables the signal to be transmitted via standard Ethernet wiring 265, ensuring compatibility with widely used industrial communication protocols. At optional step 418, the outgoing communication signal is transmitted from the communication module 360 of the D&A module 300 to the communication module 260 of the control panel 200 over Ethernet wiring 265, ensuring low-latency data transmission and robust communication between the D&A module 300 and the control panel 200.

If the processed input signal indicates an incipient explosion or spark event, the method advances to step 420. At this point, the D&A module 300, especially the processing unit 361 in the D&A module 300, activates the necessary output response systems, such as explosion suppression units or spark extinguishing devices as actuator 216, 218. At step 420, the D&A module 300 may generate output signals at the respective output connection 226 to directly drive the output response systems and sends the output signals to the respective actuators 216, 218, which could include mechanisms such as explosion suppression units, explosion dampers, or ventilation systems, designed to mitigate or neutralize the detected threat.

The method steps may conclude with step 430 where the system resets - automatically or manually by user 600 - to monitor for additional explosions.

The configurability of the D&A module 300 with reduced input wiring to the control panel 200 allows the user 600 to install less wiring between the D&A module 300 and control panel 200 eliminating possible errors and short circuits. **It** can be appreciated that the method 400 of the present teaching is more versatile than the prior art method. The method 400 may transform the input signals for either spark detector 212 or explosion detector 214 based on both types of detectors 212, 214, and may send alarm signals using less wiring than traditional control systems.

Each D&A module 300 is provided to autonomously carry out the method steps 400 for the zone the D&A module 300 is assigned to. This provides great flexibility in setting up a control system for explosion and spark protection control in a facility 100.

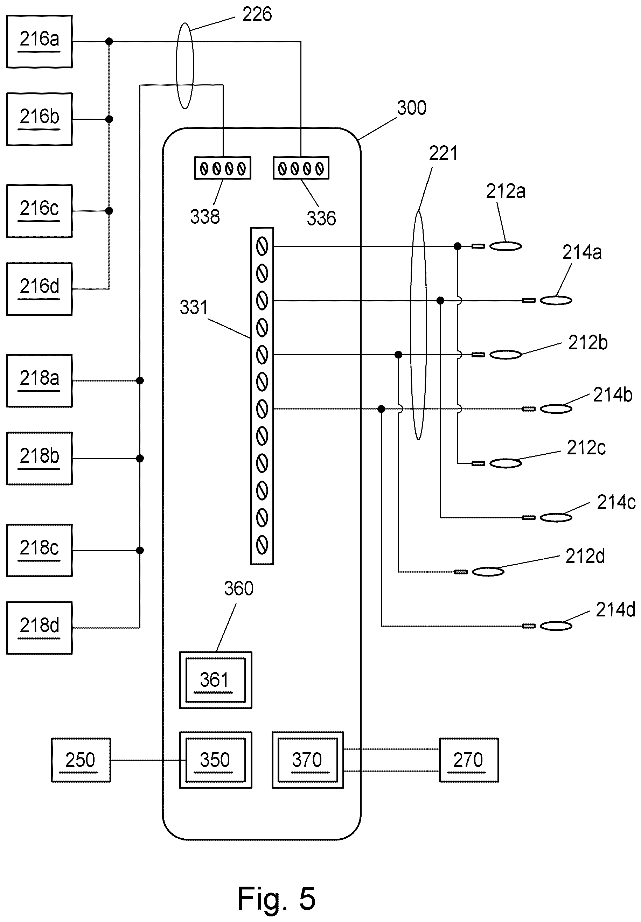

FIG. 5 illustrates an embodiment of a D&A module 300 configured for a four-zone facility 100. The D&A module 300 receives power from the power module 270 via a power terminal block 370. Two detectors (spark sensors) 212a, 212b and two detectors (explosion sensors) 214a and 214b are electrically coupled to the D&A module 300 via the input connections 221. The input connections 221 are received at an input terminal block 331 (i.e., a input terminal box, a input terminal connector) on the D&A module 300. The D&A module 300 can send the input signals to the control panel 200 using ethernet wiring, the user 600, or other systems via other terminal block connecting to the control panel. The processing unit 361 of the D&A module 300 may be configured to detect an explosion or a spark based on both the detectors (spark sensors) 212a, 212b and the detectors (explosion sensors) 214a, 212b because of the shared terminal block 331 on the D&A module 300. This is advantageous because the detectors 212, 214 measure different properties of the zones of the facility 100 which may detect different sparks or explosions at different times.

The processing unit 361 of the D&A module 300 can send output signals to the actuators (spark extinguishing units) 216a, 216b via a terminal block 336 and a terminal block 338 and the output connections 226. The terminal block 338 is electrically coupled to the actuators (explosion suppression units) 218a, 218b via the output connections 226. Separate cables are used for output signals to improve the reliability and resilience of the control panel 200 and overall explosion and spark protection system. In some countries and jurisdictions, separate actuator circuits and terminal block 336, 338 are needed for spark extinguishing and explosion suppression to comply with laws and codes. The terminal blocks 331, 336, and 338 may be, for example, but not limited to, a jack & plug, a ring, a socket, a fork terminal, a quick disconnect, an AMP connector, a Delphi connector, or a Deutsch connector.

In the embodiment of the D&A module 300 of FIG. 5, four detectors (spark sensors) 212a-212d and four detectors (explosion sensors) 214a-214d are electrically coupled to the D&A module 300 via the input connections 221 and received at the input terminal block 331 (i.e., an input terminal block, an input terminal connector). The processing unit 361 of the D&A module 300 can send output signals to the actuators 216a-216d, 218a-218d via the terminal block 336 and the terminal block 338. The terminal block 336 is electrically coupled to the spark actuators (extinguishing units) 216a-216d via the output connections 226. The terminal block 338 is electrically coupled to the actuators (explosion suppression units) 218a-218d via the output connections 226.

A display 250 may be connected to the D&A module 300 via a display terminal block 350 and may provide information to the user 600 and receive inputs related to the installation, configuration, or maintenance of the D&A module 300, detectors 212, 214, and actuators 216, 218.

In some embodiments, a remote device 620 such as a mobile device (e.g., personal computer, laptop, smartphone, tablet, handheld device, programmable logic controller (PLC), etc.) may be used to remotely communicate with the control panel 200, D&A module 300, the detectors 212, 214, and/or the actuators 216, 218 via wired and/or wireless communication link 266, as indicated in FIG. 1 by dashed lines. A wireless network and local wired network for connecting the remote device 620 can be subassemblies of and/or form the communication connection 265. Thus, the remote device 620 may be used to remotely monitor the safety control system.

Wired connections may, for example, be made via local ethernet, HDMI ports, USB ports, etc. Using an ethernet cable, the remote device 620 may connect to ethernet ports that are local to any of the central control panel 200, the D&A module 300, the detectors 212, 214 and/or actuators 216, 218. Further, the control panel 200 may broadcast a Wi-Fi signal that connects to the remote device 620.

Remotely viewing and adjusting configurable parameters in a menu structure of the control panel 200 via the remote device 620 allows for a technician to test, configure, and/or troubleshoot the D&A module 300, the detectors 212, 214, the actuators 216, 218, and the control panel 200 from afar. In some embodiments, the control panel 200 may be placed in a secure location and/or housing to prevent unauthorized access while the remotely connected remote device 620 is mounted to provide a status of the safety control system to the technician. Thus, technicians need not be physically present at the control panel 200 to view and access information from the control panel 200.

Further, the mobile device 620 may be selectively communicatively connectable with components of the safety control system. Thus, the mobile device 620 may be variously placed in direct communication with the control panel 200, the D&A modules 300, detectors 212, 214, and/or actuators 216, 218. A component to be connected to the remote device 620 may have a communication interface for connecting to the mobile device 620. Thus, when connected to any component, the remote device 620 may remotely communicate with any of the components.

The remote device 620 may also include an interface, which has input and output devices (e.g., keyboard, display, mouse, trackpad, touchscreen, etc.). Thus, the remote device 620 may view, access, and edit information from and regarding any of the connected components.

The remote device 620 has a screen, like a monitor, adapted to display a graphical user interface of the control panel 200. The graphical user interface is adapted to display parameters relating to a status of the D&A module 300, the plurality of detectors 212, 214 and the plurality of actuators 216, 218.

Control systems known in the art have predefined ranges (defined by (lower and/or upper) thresholds) for input signals for detectors 212, 214. Those ranges are generally unchangeable. Control systems with predefined ranges are thus limited to only using the same detectors 212, 214 from installation.

Detectors 212, 214 generate as input signal an electrical voltage or electrical current or resistance. With respective set ranges, the input signal delivered by a detector 212, 214 is then "translated" into a certain state of the facility 100 in zone of the detector 212, 214. In an embodiment, specific resistance, voltage and/or current values from the detectors 212, 214 determine if the detector 212, 214 is in an "OK" condition, "Trouble Low" condition, "Trouble High" condition or in an "Alarm" condition. When the input signal is within the alarm range it tells the control system for example that an incipient explosion has occurred which in turn sends a signal to the connected actuators 216, 218 in the zone of the detector 212, 214 for triggering the actuators 216, 218 and to isolate the explosion in that zone.

According to an embodiment of the invention, the thresholds of the ranges of the input signals (both low and high for each range) of a detector 212, 214 can be adjusted, preferably for each detector 212, 214, as described below.

In one embodiment, input data from the detectors 212, 214 is stored in the memory 245 of the control panel 200 in non-volatile memory and may be stored indefinitely until it is over-written or that location in memory 245 is erased. In another embodiment, for example, input data from the detectors 212, 214 may be stored in a similar memory 332 of one or more D&A modules 300 in addition to, or in place of, the memory 245 of the control panel 200. In yet another embodiment, for example, certain input data from the detectors 212, 214 indicative of notable events (e.g., an alarm condition or a trouble condition) are stored in an event log in the memory 245 that includes input data alongside additional data for context, such as, but not limited to, alarms, warning, system on/off or resets, arming/disarming the control panel 200.

Further, the control panel 200 may comprise a visual interface 455 wherein the visual interface 455 may comprise a display screen 456. The visual interface 455 may be provided on a control panel display 450 connected to the control panel 200 (as shown in FIG. 1). The control panel display 450 may be the display of remote device 620 connected to the control panel 200. The display screen 456 - described in further detail below - may include a plurality of graphical symbols including text and numerical values capable of displaying a variety of visual representations known in the art. The control panel 200 may display information from the memory 245, and/or the detectors 212, 214 and actuators 216, 218 to the user 600.

In one embodiment, the visual interface 455 is a touch screen accessible on a housing of the control panel 200. In another embodiment, the visual interface 455 is displayed on an external device, for example a field laptop or cellular phone, via a wired connection between the communication module 460 and the external device. In yet another embodiment, the visual interface 455 is displayed on the remote device 620. The wired connection may be, for example, but not limited to, a HDMI port and cable, a USB port and cable, or others known in the art.

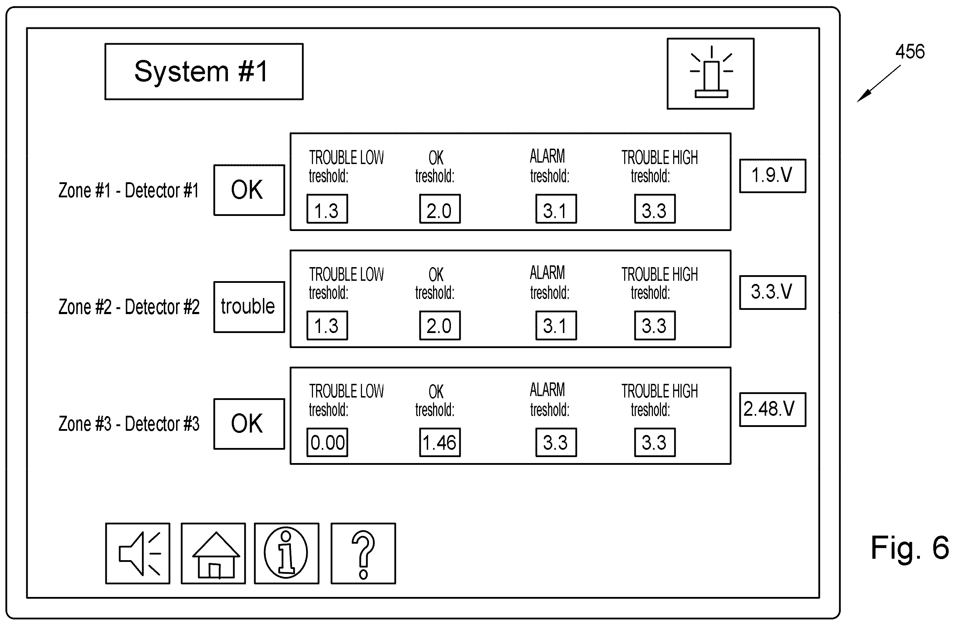

FIGS. 6, 7 and 8 depict display screens 456 for customizing detector inputs in several embodiments of the present teachings.

The display screen 456 in FIG. 6 visually displays input signals from three detectors 212, 214 in three different zones of the facility 100 (labeled Zone #1 - Detector #1, Zone #2 - Detector #2, and Zone #3 - Detector #3). Each of the Detectors has a TROUBLE LOW condition (i.e., a low condition), an OK condition (i.e., a normal condition), an ALARM condition, and a TROUBLE HIGH condition (i.e., a high condition). Each of the conditions is defined as a corresponding range between a lower threshold and an upper threshold of the input signal. In some embodiments, the upper threshold for one condition or range may also be the lower threshold for another condition or range that is adjacent or subsequent numerically.

For example, the TROUBLE LOW range may be between the lower threshold of 0 volts and the upper threshold of a TROUBLE LOW threshold, the OK range is between the upper threshold of the TROUBLE LOW threshold and the upper threshold of the OK threshold, the ALARM range is between the upper threshold of the OK threshold and the upper threshold of the ALARM threshold, and the TROUBLE HIGH range is greater than the TROUBLE HIGH threshold.

In the illustrative example, the inputs signals from the Detectors #1-#3 (i.e., input sensors 212, 214) are displayed on the righthand side of the display screen 456, with an indication of the comparison to the ranges on the lefthand side of the display screen 456. Detectors #1 and #3 are in the OK range while Detector #2 is in the TROUBLE HIGH range. In some embodiments, an input signal in the low condition or range is indicative of a short circuit for the related detector 212, 214 and an input signal in the high condition range is indicative of an open circuit for the related detector 212, 214.

Between the input signal value and the indication are a series of text boxes. A user can select each of the series of text boxes on the visual interface 455 (i.e., a graphical user interface or GUI). In one embodiment, the user 600 inputs a new threshold by selecting a value from a drop-down menu in the text box. In another embodiment, the user 600 inputs a new threshold by typing a value in the text box.

The OK range for Detectors #1-3 may, for example, start at preset 0 volts and 1 volt. Then a user may adjust the OK-TROUBLE threshold by 0.01 volt increments and, for example, set the Detector #1 OK range to be 0 to 1.3 volts, the Detector #2 OK range to be 0 to 1.46 volts, and the Detector #3 range to have yet a different OK-TROUBLE threshold.

In some embodiments, a user can set two of the sets of thresholds to the same value and thus reduce the number of ranges. In the illustrative example, Detector #3 has the ALARM threshold and the TROUBLE HIGH threshold both input (i.e., selected) to 3.3 V. Thus, Detector #3 may be modified from having four conditions and related ranges - TROUBLE LOW, OK, ALARM, and TROUBLE HIGH - to three ranges - TROUBLE LOW, OK, and ALARM.

It can be appreciated that, based on the present teachings, the control panel 200 with visual interface 455 for receiving user inputs to adjust ranges for comparison to the input signals from detectors 212, 214 can be reconfigured to work with different detectors without replacing the control panel 200 or components thereof. New detectors with different ranges of detection, improved precision, or improved accuracy can be used with the control panel 200. In one embodiment, for example, a user may be able to select a profile from the memory 445 that includes one or more ranges and conditions for types of detectors 212, 214 (e.g., an infrared sensor or a pressure sensor) and then further customize associated values of the one or more ranges on the display screen 456.

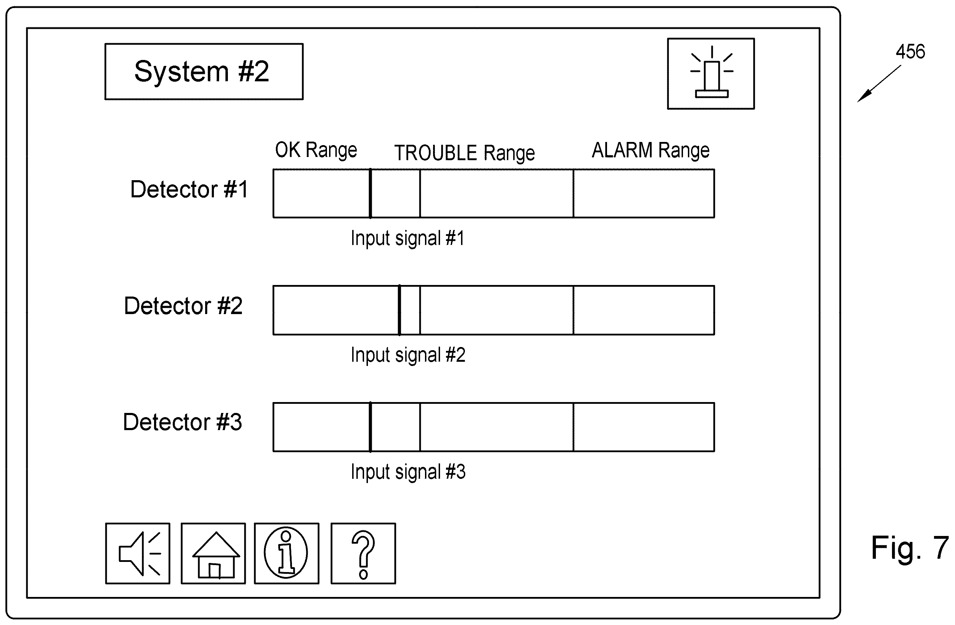

According to another embodiment in FIG. 7, the display screen 456 visually displays input signals from three detectors 212, 214 (labeled Detector #1, Detector #2, and Detector #3) and an OK range, TROUBLE range, and an ALARM range for each on a horizontal bar. In the illustrative example, all three input signals are in the OK range which indicates the control panel 200 does not send any output signals to the actuators 216, 218 to cause an explosion suppression or spark extinguishing response.

Each of the horizontal bars in the illustrative example has 2 threshold values between the ranges - an OK-TROUBLE threshold and a TROUBLE-ALARM threshold. In this example, the OK range is between 0 volts and the OK-TROUBLE threshold, and the ALARM range is above the TROUBLE-ALARM threshold.

In another embodiment, the OK range is between the TROUBLE range and the ALARM range. In yet another embodiment, there are two TROUBLE ranges - TROUBLE LOW range and TROUBLE HIGH range - with the TROUBLE LOW range and the ALARM range, and the ALARM range between the OK range and the TROUBLE HIGH range. It can be appreciated that other combinations and arrangements of ranges and conditions are possible to suit the characteristics of the detectors 212, 214.

Each of the horizontal bars can be manipulated by the user 600 to adjust at least one of the OK range, the TROUBLE range, or the ALARM range (or its respective thresholds). The user 600 may move the vertical lines - representing the OK-TROUBLE threshold and TROUBLE-ALARM threshold - via a touch screen or click of a mouse button, although not limited thereto.

The OK range for Detectors #1-3 (i.e., input sensors 212, 214) may, for example, start at preset 0 volts and 1 volt. Then the user 600 may adjust the OK-TROUBLE threshold by 0.01 volt increments and, for example, set the Detector #1 OK range to be 0 to 1.3 volts, the Detector #2 OK range to be 0 to 1.46 volts, and the Detector #3 range to have yet a different OK-TROUBLE threshold. It can be appreciated by one skilled in the art that similar adjustments can be made with user input to each Detector's TROUBLE range and ALARM range by manipulated other thresholds on the display screen 456.

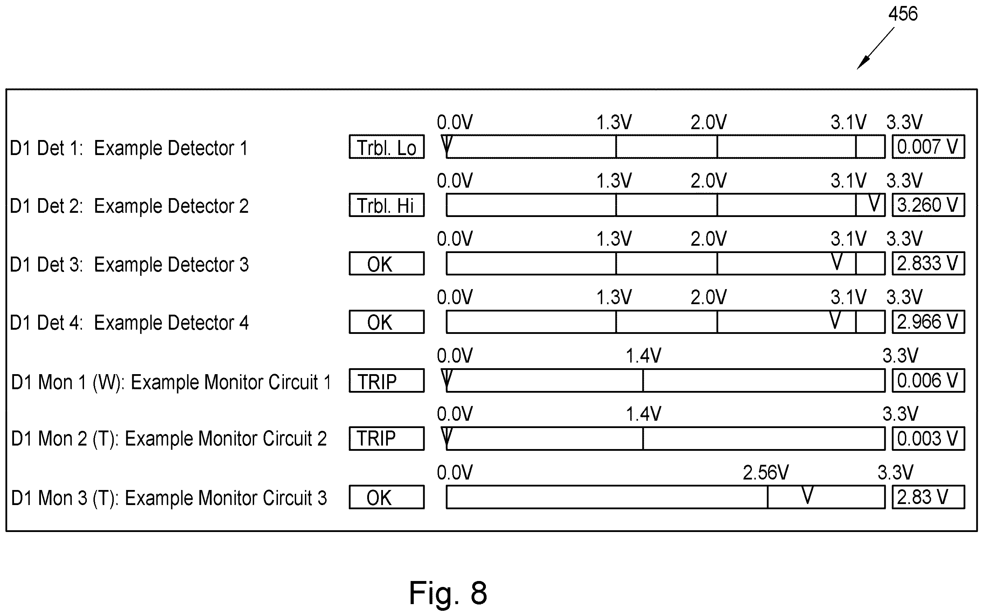

According to another embodiment in FIG. 8, the display screen 456 displays a plurality of detectors (Example Detector 1 to 4 and Example Monitor Circuit 1 to 3) including a plurality of ranges and values for various conditions. All of the detectors displayed may be associated with, for example, one zone in a facility and one associated actuator. Each of the horizontal bars can be manipulated by a user via the visual interface 455 to adjust at least one of the OK range, the TROUBLE range, or the ALARM range. The manipulation may be, for example, by entering a value in a text box (on the same image or a pop-up image), selecting a value from a drop-down list, or touching and dragging portions of the horizontal bar. The user may move the vertical lines - representing the OK-TROUBLE threshold and TROUBLE-ALARM threshold - via a touch screen or click of a mouse button, although not limited thereto.

Additionally, after the lower values and upper values of each of the ranges or conditions are input by a user 600, the detectors 212, 214 are displayed on the visual interface 455 as shown in FIG. 8. Similar to the ranges illustrated within FIG. 6 and 7, FIG. 8 illustrates multiple detectors with input signals in a variety of ranges. Example Detector 1 is producing a voltage classified in the TROUBLE LOW range. This may indicate a short circuit and the control panel 200 will notify a user using, for example, the alarm system 200 but does not send any output signals to the actuators 216, 218 to cause an explosion suppression or spark extinguishing response. Example Detector 2 is producing a voltage classified in the TROUBLE HIGH range. This may indicate an open circuit and the control panel 200 will notify a user using, for example, the alarm system 220 but does not send any output signals to the actuators 216, 218 to cause an explosion suppression or spark extinguishing response.

Both Example Detectors 3 and 4 and Example Monitor Circuit 3 (which may consist of several detectors 212, 214 sending a combined signal to the control panel 200) are producing a voltage within the OK range (i.e., the normal range or normal condition). In the OK range, no alarm is made via the alarm system 220. If any of the Example Detectors 1-4 or Example Monitor Circuits 1-3 were in the ALARM condition or range, then the D&A module 300 would send an output signal to the actuators 216, 218 to cause an explosion suppression or spark extinguishing response.

In some embodiments, the control panel 200 may have more detectors 212, 214 in a given zone that can be displayed at one time on the display screen 456, in which case a user may scroll - using, for example, a touch, mouse, or keyboard - to view additional detector inputs and associated conditions and ranges on the display screen 456.

All thresholds of the ranges of a detector 212, 214, preferably of all detectors 212, 214, are stored in the memory 332 of the respective D&A module 300, and possibly also in the memory 245 of the control panel 200.

In some embodiments, the control panel 200 may determine that a new detector 212, 214 has been added to the safety system due to the presence of a new input signal, and the display screen 456 may prompt a user 600 to input values for associated ranges for the normal, alarm, and/or trouble conditions for the new detector 212, 214, that are then stored for the new detector 212, 214. In another embodiment, the control panel 200 may determine that a detector 212, 214 has been replaced because of a change in the input signal that is not quite indicative of an alarm or trouble condition, and the display screen 456 may prompt a user 600 to adjust values for associated ranges for the normal, alarm, and/or trouble conditions for the replacement detector 212, 214, that are then stored for the replacement detector 212, 214.

In a preferred embodiment, the ranges (or thresholds of the ranges) for a detector 212, 214, for the normal, alarm, and/or trouble conditions, for example, may be configured (adjusted or set) via a display screen 456 of the control panel 200. The control panel 200 may send the configured ranges for the detector 212, 214 to the respective D&A module 300 the detector 212, 214 is connected to and the configured ranges for the detector 212, 214 are stored in the memory 332 of the D&A module 300. The D&A module 300 determines the state of the detector 212, 214 by comparing input signals of the detector 212, 214 to the stored ranges and triggers an actuator 216, 218 connected to the D&A module 300 in case of a safety event, like a detected incipient explosion or spark, (e.g. when an ALARM condition is determined).

The ability to change the OK, TROUBLE, and ALARM conditions by changing ranges of input signals, and related values, of detectors 212, 214 without replacing the control panel 200 or its components may be valuable for the interoperability of the control panel 200 with many types of detectors 212, 214 and improvements to the same.

It is to be noted that in some embodiments, the input signal ranges (or thresholds of the ranges) for a detector 212, 214 are configured via a display 250 connected to the D&A module 300 that provides the visual interface 455 with the required display screen 456.

While the present teachings have been described above in terms of specific embodiments, it is to be understood that they are not limited to these disclosed embodiments. Many modifications and other embodiments will come to mind to those skilled in the art to which this pertains, and which are intended to be and are covered by both this disclosure and the appended claims. It is intended that the scope of the present teachings should be determined by proper interpretation and construction of the appended claims and their legal equivalents, as understood by those of skill in the art relying upon the disclosure in this specification and the attached drawings.

## Claims

1. A safety control system, comprising a control panel (200) and a number of detection and actuation modules (300) located remote from the control panel (200), wherein a communication connection (265) is provided for each of the number of detection and actuation modules (300) with each communication connection (265) connecting the respective detection and actuation module (300) with the control panel (200) for electronic communication, wherein each of the number of detection and actuation modules (300) is adapted to receive input signals from a plurality of detectors (212, 214) connected to the respective detection and actuation module (300) over an input connection (221), wherein each of the number of the detection and actuation module (300) is adapted to monitor the input signals received from each of the detectors (212, 214) connected to the respective detection and actuation module (300) and upon identification of a safety event to actuate one or more of the plurality of actuators (216, 218) connected to the respective detection and actuation module (300) by sending output signals to the one or more of the plurality of actuators (216, 218) over an output connection (226), and wherein each of the number of detection and actuation modules (300) is adapted to indicate the safety event to the control panel (200) via the communication connection (265).

2. The safety control system of claim 1, wherein the communication connection (265) comprises an ethernet connection with an ethernet cable.

3. The safety control system of claim 1, wherein at least one of the number of detection and actuation modules (300) is located proximate to the plurality of detectors (212, 214) and the plurality of actuators (216, 218) connected to the respective detection and actuation module (300).

4. The safety control system of claim 1, wherein at least one of the plurality of detectors (212, 214) is an explosion detector and at least one of the detectors (212, 214) is a spark detector and wherein at least one of the plurality of actuators (216, 218) is an explosion suppression actuator and at least one of the actuators (216, 218) is a spark extinguishing actuator.

5. The safety control system of claim 1 or 4, wherein at least one of the plurality of detectors (212, 214) comprises a pressure sensor, an infrared sensor, or an ultraviolet sensor.

6. The safety control system of claim 1 or 4, wherein at least one of the plurality of actuators (216, 218) comprises a suppressor or an explosion isolation valve.

7. The safety control system of any of claims 1 to 6, wherein safety control system comprises a remote device (620) in electronic communication with the control panel (200) over a communication link (266), the remote device (620) having a screen adapted to display a graphical user interface of the control panel (200), the graphical user interface being adapted to display parameters relating to a status of the plurality of detectors (212, 214) and the plurality of actuators (216, 218).

8. The safety control system of claim 7, wherein the status comprises a fault status of the one or more detectors (212, 214) or actuators (216, 218).

9. The safety control system of claim 7, wherein the graphical user interface is adapted to accept user input for configuring the parameters.

10. The safety control system of any of claims 1 to 9, wherein at least one of the number of detection and actuation modules (300) comprises a memory (332) for storing a set of ranges for the input signals of the connected detectors (212, 214), the set of ranges including a normal condition and an alarm condition for the connected detectors (212, 214), wherein the at least one detection and actuation module (300) is configured to identify the safety event, when an input signal is received that meets the associated alarm condition stored in the memory.

11. The safety control system of claim 10, wherein the set of ranges including a trouble high condition and/or a trouble low condition, such that the detection and actuation modules (300) generates an alert when an input signal is received that meets the trouble high condition and/or the trouble low condition.

12. The safety control system of claim 11, wherein the control panel (200) comprises a graphical user interface adapted to accept user input for configuring an upper threshold and a lower threshold for at least one, preferably each, range in the set of ranges.

13. The safety control system of claim 10 or 11, wherein the control panel (200) being provided to send the configured upper threshold and lower threshold for a detector (212, 214) to the respective detection and actuation modules (300) over the communication connection (265).

14. A method for spark and explosion protection control, comprising the steps of
- receiving, at each of a number of detection and actuation modules (300), at least one input signal from at least one detector (212, 214) connected to the respective detection and actuation module (300) over an input connection (221);
- monitoring, at each of the number of detection and actuation modules (300), the input signals received from the connected detectors (212, 214) for identifying a safety event;
- generating an output signal in the respective detection and actuation module (300) upon identification of a safety event;
- sending, from the respective detection and actuation module (300), the output signal to at least one actuator (216, 218) connected to the respective detection and actuation module (300) over an output connection (226)
- indicating, by the respective detection and actuation module (300), the safety event to the control panel (200) via the communication connection (265).

15. The method of claim 14, wherein a set of ranges for the input signals of the connected detectors (212, 214) is stored in a memory (332) of at least one of the number of detection and actuation modules (300), the set of ranges including a normal condition and an alarm condition for the connected detectors (212, 214), wherein the at least one detection and actuation module (300) identifies the safety event, when an input signal is received that meets the associated alarm condition stored in the memory, and wherein an upper threshold and a lower threshold for at least one, preferably each, range in the set of ranges is configured by user input on a graphical user interface of the control panel (200).
